# EUROPÄISCHE PATENTSCHRIFT

(11) **EP 3 161 889 B1**
(45) Veröffentlichungstag und Bekanntmachung des Hinweises auf die Patenterteilung: **21.08.2019**
(21) Anmeldenummer: 15731928.6
(22) Anmeldetag: 26.06.2015
(51) Int. Cl.: H01M 8/1007, H01M 8/1213, H01M 4/86, H01M 4/88, H01M 4/92

(54) **VERFAHREN ZUR HERSTELLUNG VON GASDIFFUSIONSELEKTRODEN FÜR BRENNSTOFFZELLE, SOWIE GASDIFFUSIONSELEKTRODE UND BRENNSTOFFZELLE**
METHOD FOR PRODUCING GAS DIFFUSION ELECTRODES FOR A FUEL CELL, GAS DIFFUSION ELECTRODE, AND FUEL CELL
PROCÉDÉ DE PRODUCTION D'ÉLECTRODES À DIFFUSION GAZEUSE POUR PILE À COMBUSTIBLE, AINSI QU'ÉLECTRODE À DIFFUSION GAZEUSE ET PILE À COMBUSTIBLE

(30) Priorität: 27.06.2014 DE 102014109071
(43) Veröffentlichungstag der Anmeldung: 03.05.2017
(73) Patentinhaber: Leibniz-Institut für Plasmaforschung und Technologie e.V., 17489 Greifswald (DE)
(72) Erfinder: BRÜSER, Volker, 17489 Greifswald (DE); KRUTH, Angela, 17489 Greifswald (DE); SIEVERS, Gustav, 17489 Greifswald (DE); WALTER, Christian, 01277 Dresden (DE); JAKUBITH, Sven, 12203 Berlin (DE); STEFFEN, Florian, 18182 Blankenhagen (DE)
(74) Vertreter: Gramm, Lins & Partner Patent- und Rechtsanwälte PartGmbB
(86) Internationale Anmeldenummer: PCT/EP2015/064504
(87) Internationale Veröffentlichungsnummer: WO 2015/197812

(56) Entgegenhaltungen:
- US-A1- 2004 076 870
- US-A1- 2010 021 787
- SIEVERS GUSTAV ET AL: "Mesoporous Pt-Co oxygen reduction reaction (ORR) catalysts for low temperature proton exchange membrane fuel cell synthesized by alternating sputte", JOURNAL OF POWER SOURCES, ELSEVIER SA, CH, Bd. 268, 16. Juni 2014 (2014-06-16), Seiten 255-260, XP029010540, ISSN: 0378-7753, DOI: 10.1016/J.JPOWSOUR.2014.06.013

## Beschreibung

Die Erfindung betrifft ein Verfahren zur Herstellung von Gasdiffusionselektroden für Brennstoffzellen, die mindestens einen elektrisch leitfähigen Träger und mindestens eine edelmetallhaltige katalytische Schicht auf dem Träger hat.

Die Erfindung betrifft weiterhin eine solche Gasdiffusionselektrode für Brennstoffzellen mit mindestens einem elektrisch leitfähigen Träger und mit mindestens einer edelmetallhaltigen katalytischen Schicht auf dem Träger, sowie eine Brennstoffzelle mit einer Anzahl solcher Gasdiffusionselektroden.

Brennstoffzellen werden eingesetzt, um einen (z.B. gasförmigen) Brennstoff, wie bspw. Wasserstoff mit einem Oxidationsmittel, wie bspw. Sauerstoff direkt in elektrische und thermische Energie umzuwandeln. Eine Brennstoffzelle hat Elektroden, die durch eine semipermeable Membran voneinander getrennt sind. Eine solche semipermeable Membran kann auch durch ein ionleitendes Elektrolyt realisiert werden. Die Gasdiffusionselektroden für Brennstoffzellen werden aus einem elektrisch leitfähigen und in der Regel auch gasdurchlässigen Träger und mindestens einer katalytischen Schicht auf dem Träger gebildet. Diese katalytische Schicht ist in der Regel ein edelmetallbeschichtetes Kohlenstoffpulver, das in einem lonomer, beispielsweise sulfonisiertes Tetrafluorethylen-Polymer dispergiert ist. Zum Beispiel sind die bimetallischen Systeme Pt-Al, Pt-Co, Pt-Cr, Pt-Mo, Pt-Ni, Pt-Ru, Pt-Sn zur Bildung der katalytischen Schicht geeignet.

Die edelmetallhaltige katalytische Schicht der Gasdiffusionselektroden führt zu relativ hohen Kosten und einer begrenzten Lebensdauer der Gasdiffusionselektroden bzw. der damit gebildeten Brennstoffzelle.

Die nass-chemische Herstellungsmethode für die Katalysatorschicht ist komplex. Bei nass-chemisch hergestellten Katalysatorschichten steht zudem nur ein Teil des Edelmetalls für die katalytische Reaktion zur Verfügung.

WO 00/79630 A2 beschreibt eine Gasdiffusionselektrode für Brennstoffzellen, bei der eine relativ dünne Zone katalytischen Materials in der Schnittstelle zwischen der jeweiligen Elektrode und der Membran vorgesehen wird. Die elektrisch leitfähige Trägerelektrode hat dabei ein erstes katalytisches aktives Material und mindestens ein ionen-leitfähiges Polymer. Mindestens zwei unterschiedliche weitere katalytische aktive Metalle werden dann als Dünnschicht auf diese elektrisch leitfähige katalytische Trägerelektrode aufgebracht. Für das Abscheiden der Dünnschichten werden Vakuumbeschichtungsverfahren, wie chemische Dampfbeschichtung oder physikalische Gasphasenabscheidung oder thermische Beschichtung vorgeschlagen.

US 2012/0238440 A1 offenbart eine Gasdiffusionselektrode für Brennstoffzellen, bei dem auf einem aus Graphitgewebe gebildeten Träger Graphit-Nanoröhren aufgebracht werden. Diese Graphit-Nanoröhren werden dann mit einem katalytischen Material dünnschicht-beschichtet, um eine edelmetallhaltige katalytische Schicht zu bilden.

J. Kibsgaard, Y. Gorlin, Z. Chen, Th. Jaramillo: Meso-Structured Platinum Thin Films: Active and Stabile Electrocatalysts for the Oxygen Reduction Reaction, in: Journal of the American Chemical Society, 13. April 2012, 7758-7765 schlägt zur Erhöhung der Aktivität und der Stabilität der katalytischen Schicht einer Gasdiffusionselektrode vor, mesostrukturierte Platin-Dünnschichten durch Nutzung eines Template zu verwenden.

Aus CN 102082277 A ist ein Verfahren zur Herstellung einer Gasdiffusionselektrode für Brennstoffzellen bekannt, bei dem zunächst ein Edelstahl-Fasergewebe im Hochtemperatur-Vakuumsinterprozess hergestellt wird. Anschließend wird sequenziell eine chromhaltige Schicht und eine Graphitschicht auf das Edelstahlgewebe aufgesputtert und das beschichtete Edelstahlgewebe dann unter Verwendung von Polytetrafluoroethylen in einem hydrophoben Prozess gesintert. Anschließend erfolgt eine Beschichtung mit Graphit, um die Metall-Gas-Diffusionsschicht zu erhalten.

Z. Yan, M. Wang, B. Huang, R. Liu, J. Zhao: Graphene Supported Pt-Co Alloy Nanoparticles as Cathode Catalyst for Microbial Fuel Cells, in: Int. J. Electrochem. Sci., 8 (2013) 149-158 schlägt zur Bildung der edelmetallhaltigen katalytischen Schicht von Gasdiffusionselektroden vor, Nanopartikel aus einer graphen-geträgerten Pt-Co-Legierung zu verwenden.

In A. Papandrew, R. Atkinson, G. Goenaga, S. Kocha, J. Zack, B. Pivovar, Th. Zawodzinski: Oxygen Reduction Activity of Vapor-Grown Platinum Nanotubes, in: Journal of The Electrochemical Society, 160 (8) F848-F852 (2013) wird vorgeschlagen, einen aus Platin-Nanoröhren gebildeten Katalysator in eine Komposit-Elektrode durch Mischung mit korrosionsbeständigen Carbonmaterialien einzubetten, um möglichst dicke Katalytschichten zu erhalten, die bei hohen Stromdichten ausreichend erhaltbar sind.

In Ch-H. Wan, M-T. Lin, Q-H. Zhuang, Ch-H. Lin: Preparation and performance of novel MEA with multi catalyst layer structure for PEFC by magnetron sputter deposition technique, in: Surface & Coatings Technology 201 (2006) 214-222 ist die Bildung einer katalytischen Schicht für eine Gasdiffusionselektrode aus mehreren zweidimensionalen aktiven Schichten beschrieben. Hierbei wird auf einen elektrisch leitfähigen und gasdurchlässigen Träger GDL alternierend eine Nafion-Graphit-Schicht und im Sputter-Prozess eine platinhaltige Schicht aufgebracht, um eine dreidimensionale Reaktionszone zu schaffen. Die Nafion-Graphit-Schicht wird in Form einer Tinte aufgedruckt. Die alternierenden Pt-Carbon-Nafion-Schichten bilden eine auf der gasdurchlässigen Schicht GDL liegende mikroporöse Schicht MPL.

H. Rabat, P. Brault: Plasma Sputtering Deposition of PEMFC Porous Carbon Platinum Electrodes, in: Fuel Cells 08, 2008, No. 2, 81-86 beschreibt die Herstellung von Gasdiffusionselektroden durch Plasma-sputtern zur Dünnschichtbeschichtung eines porösen säulenförmigen Graphitfilms gefolgt durch Beschichtung des platinhaltigen Katalysators direkt auf die protonenleitende Membran. Graphit und Platin wird alternierend auf beide Seiten der Membran aufgebracht. Hierdurch kann der Wirkungsgrad erhöht werden.

B. Schwanitz: Reduzierung der Platinbeladung und Imaging von Alterungsphänomenen in der Polymerelektrolyt-Brennstoffzelle, Diss. ETH Zürich Nr. 20142, 2012 beschreibt das abwechselnde Sputtern von Pt und Co für Anode und Kathode. Zur Erhöhung der Platin-Oberfläche wird ein alternierendes Sputtern von Co in Pt vorgeschlagen. Dies erfordert allerdings die nachfolgende Säurebehandlung der Elektroden, um verunreinigungsbedingte Spannungsverluste durch gelöstes Co²⁺ zu verhindern.

G. Sievers, S. Mueller, A. Quade, F. Steffen, S. Jakubith, A. Kruth, V. Brueser: Mesoporous Pt-Co oxygen reduction reaction (ORR) catalysts for low temperature proton exchange membrane fuel cell synthesized by alternating sputtering, in: Journal of Power Sources 268, 2014, S. 255 bis 260 offenbart ein Verfahren zum wechselweisen Sputtern von Platin und Cobalt auf Gasdiffusionsschichten mit mikroporösen Schichten.

US 2010/0021787 A1 beschreibt ein Verfahren zur Erzeugung einer katalytischen Schicht für eine Brennstoffzelle durch Aufbringen von Schichten mittels Sputtern oder Gasphasenabscheidung. Dabei wird auf ein Substrat eine gemischte Schicht aus einem katalytischen Metall und einem porenbildenden Metall ausgebildet. Das Sputtern oder Gasphasenabscheiden der Partikel erfolgt dabei gleichzeitig.

US 2004/0076870 A1 beschreibt eine Gasdiffusionselektrode mit Schichten aus Carbonpulver und aufgesputterten Platin. Die katalytische Schicht wird dabei aus der Platinschicht gebildet, die durch Sputtern hergestellt wird.

Ausgehend hiervon ist es Aufgabe der vorliegenden Erfindung ein verbessertes Verfahren zur Herstellung von Gasdiffusionselektroden sowie entsprechende Gasdiffusionselektroden für Brennstoffzellen und Brennstoffzellen mit solchen Gasdiffusionselektroden zu schaffen.

Die Aufgabe wird mit dem Verfahren mit den Merkmalen des Anspruchs 1 sowie durch die Gasdiffusionselektrode mit den Merkmalen des Anspruchs 5 und die Brennstoffzelle mit den Merkmalen des Anspruchs 10 gelöst. Vorteilhafte Ausführungsformen sind in den Unteransprüchen beschrieben.

Für die Herstellung von Gasdiffusionselektroden wird vorgeschlagen, dass bei dem wechselweisen Aufbringen von platinhaltigen Partikeln und nicht metallischen leitfähigen Partikeln in Form von graphit-, titan-, cobald- und/oder wolframhaltigen Partikeln weiterhin Oxidationsformen von Titan oder Wolfram enthaltende Partikeln durch physikalische Gasphasenabscheidung im Wechsel auf den elektrisch leitfähigen Träger zum Erzeugen der mehrere Teilschichten aufweisenden katalytischen Schicht aufgebracht werden. Unter einem "wechselweisen Aufbringen" wird verstanden, dass in mehr als zwei Schichten jeweils edelmetallhaltige Partikel in Form der platinhaltigen Partikel und die nicht metallischen leitfähigen graphithaltigen Partikel sowie die weiteren nicht metallischen leitfähigen Partikel in Form der Oxidationsformen von Titan oder Wolfram enthaltenen Partikel aufgebracht werden.

Unter "Partikel" im Sinne der vorliegenden Erfindung wird eine im aufgebrachten Zustand ortsfeste Substanz aus einem chemischen Stoff oder Stoffgemisch unabhängig von einem Kristallisationszustand bzw. unabhängig von der Erkennbarkeit einzelner Teilchen verstanden. Damit sind auch Komponenten umfasst, die ohne eine erkennbare Teilchenstruktur ineinander übergehende Teilchen haben.

Durch ein solches alternierendes Aufbringen einerseits der platinhaltigen Partikel und der anderen nicht metallischen leitfähigen Partikel, d.h. der graphit-, titan-, cobalt- und/oder wolframhaltigen Partikel und Oxidationsformen von Titan oder Wolfram enthaltenden Partikel, mit dem Prozess der physikalischen Gasphasenabscheidung, d.h. in einem hybriden PVD-Prozess, gelingt es, den Gehalt an teurem Edelmetall, wie insbesondere Platin, deutlich zu reduzieren und dennoch eine hinreichend große und verbesserte Aktivität der katalytischen Schicht sicherzustellen. Durch die Nutzung eines Hybrid-Prozesses zur kombinierten physikalischen Gasphasenabscheidung einerseits von edelmetallhaltigen Partikeln und andererseits von nicht metallischen leitfähigen graphit-, titan-, cobalt- und/oder wolframhaltigen und Oxidationsformen von Titan oder Wolfram enthaltenden Partikeln wird die aktive Oberfläche der katalytischen Schicht erhöht und die edelmetallhaltigen Partikel so eingebunden, dass sie trotz geringerer Konzentration eine vergleichbar hohe Aktivität entfalten. Zudem kann durch dieses wechselweise Aufbringen der unterschiedlichen Partikel im Prozess der physikalischen Gasphasenabscheidung eine überaus langzeitstabile Gasdiffusionselektrode geschaffen werden.

In entsprechender Weise hat die Gasdiffusionselektrode eine edelmetallhaltige katalytische Schicht, die alternierende Dünnschichten aus unterschiedlichem Material hat, die in physikalischen Gasphasenabscheideprozessen aufgebracht sind. Alternierend ist hierbei so zu verstehen, dass mindestens drei Schichten wechselweise vorhanden sind. Die Schichtebenen können dabei durch ineinander greifen der unterschiedlichen Partikel ineinander übergehen.

Optional kann zusätzlich ein Platzhalter aus einer lösbaren z.B. ein unedles Metall aufweisenden Komponente (z.B. Cobalt - Co) für die anschließende Herauslösung vorgesehen sein, um eine verbesserte mesoporöse Gitterstruktur für optimierte Gasdiffusion der auf den Träger aufgebrachten Schicht zu schaffen.

Durch das Aufbringen einerseits der katalytischen edelmetallhaltigen Komponente und andererseits einer weiteren, nicht metallische leitfähige graphit- titan-, cobalt- und/oder wolframhaltige Partikel und Oxidationsformen von Titan oder Wolfram enthaltende Partikel umfassenden leitfähigen Komponente (nachfolgend auch kurz als NML bezeichnet) im physikalischen Gasphasenabscheideprozess wird auch bei dem alternierenden Aufbringen von mehr als zwei Dünnschichten eine Schichtdicke der resultierenden katalytischen Schicht erreicht, die wesentlich geringer ist, als eine im konventionellen Verfahren z.B. durch Sprühabscheidung oder in Verbindung mit dem Aufdrucken einer Nafion-Kohlenstoff-Tintenschicht realisiert wird.

Durch dieses wechselseitige Aufbringen jeweils mehrerer Dünnschichten aus edelmetallhaltigen Partikeln und aus NML Partikeln durch physikalische Gasphasenabscheidung wird zudem eine relativ hohe Stabilität der resultierenden katalytischen Schicht erreicht und auf diese Weise die Haltbarkeit und die aktive Oberfläche der Brennstoffzelle erhöht.

Die Gasdiffusionselektrode ist besonders bevorzugt für eine Polymerelektrolyt-Brennstoffzelle PEMFC, einschließlich von Hochtemperatur- Polymerelektrolyt-Brennstoffzellen HT-PEMFC geeignet.

Die platinhaltigen Partikel können bspw. eine Legierung enthaltend Platin und Cobalt oder aber auch andere Platin-Legierungen sein. Denkbar ist auch die Nutzung reiner Platin- und Cobalt-Partikel. Die Cobalt-Partikel können dann als Platzhalter fungieren, die nachfolgend mit Säure entfernt werden und eine mesoporöse Schicht zurücklassen.

Das wechselweise Aufbringen der edelmetallhaltigen Partikel und der NML Partikel erfolgt vorzugsweise durch Bedampfen, Elektrodenstrahlverdampfen, Laserstrahlverdampfen, Lichtbogenverdampfen, Molekularstrahlepitaxie, Sputtern (Kathodenzerstäubung), Magnetron-Sputtern, lonenplattieren oder ionisierte Cluster-Strahl-Abscheidung (ICBD). Als besonders vorteilhaft hat sich dabei die Sputterdeposition herausgestellt, bei der die Partikel durch lonenbeschuss zerstäubt und in die Gasphase überführt und auf dem Träger abgeschieden werden. Die physikalische Gasphasenabscheidung von edelmetallhaltigen Partikeln und NML Partikeln wird dabei im Hybrid-Prozess jeweils unabhängig voneinander durchgeführt, da z.B. Platin und Graphit als geeignete Partikel unterschiedliche Sputtereigenschaften haben. Bei dem wechselweisen Aufbringen der edelmetallhaltigen Partikel und der NML Partikel im Prozess der physikalischen Gasphasenabscheidung hat sich herausgestellt, dass sich die NML Komponente nicht mit den edelmetallhaltigen Partikeln vermischt und auf diese Weise die Oberfläche vorteilhaft vergrößert wird.

Als NML Komponente werden nicht nur graphithaltige Partikel, wie Graphitpartikel, sondern auch Titan oder Wolfram in geeigneten Oxidationsformen, wie z.B. Titandioxid, eingesetzt.

Der elektrisch leitfähige Träger besteht vorzugsweise aus einer Gasdiffusionsschicht GDL mit einer mikroporösen Schicht MPL. Die mikroporöse Schicht MPL wird dabei in an sich bekannter Weise vorzugsweise aus Karbonpulver und einem Hydrophobierungsmittel gebildet, auf das die katalytische Schicht in der oben beschriebenen Dünnschichttechnik aufgebracht wird. Die Gasdiffusionsschicht GDL bildet zusammen mit der mikroporösen Schicht MPL und der darauf aufgebrachten edelmetallhaltigen katalytischen Schicht die Gasdiffusionselektrode GDE einer Brennstoffzelle. Auf die katalytische Schicht wird dann in an sich bekannter Weise eine Membran aufgelegt und auf der gegenüberliegenden Seite eine entsprechende Gasdiffusionselektrode GDE in gleicher Weise platziert. Damit wird eine aus Anode und Kathode bestehende Membran-Elektrodenanordnung gebildet, bei der zwei elektrisch leitfähige und gasdurchlässige Träger (GDL+MPL) mit einer aus alternierenden Dünnschichten aus edelmetallhaltigen Partikeln und nicht-metallischen leitfähigen Partikeln gebildeten katalytischen Schicht diametral gegenüberliegend angeordnet sind. Zwischen den benachbarten edelmetallhaltigen katalytischen Schichten auf den beiden elektrisch leitfähigen und gasdurchlässigen Trägern ist dann eine Membran angeordnet. Die Membran mit der daran angrenzenden katalytischen Schicht bildet dabei eine katalytisch beschichtete Membran CCM.

Die Erfindung wird nachfolgend anhand der beigefügten Zeichnungen näher erläutert. Es zeigen:
- Figur 1: - schematischer Aufbau einer Membran-Elektrodenanordnung für Brennstoffzellen in perspektivischer Ansicht;
- Figur 2: - Schnittansicht durch eine Membran-Elektrodenanordnung für Brennstoffzellen mit alternierend im physikalischen Gasphasenabscheidungsprozess auf einen Träger aufgebrachten edelmetallhaltigen Partikelschichten und NML-Partikelschichten.

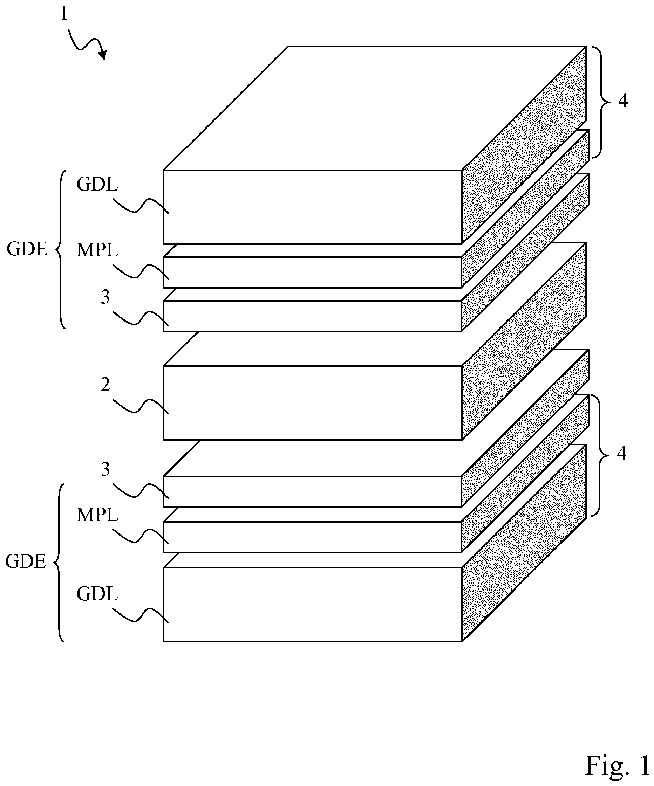

Figur 1 lässt eine Skizze eines Schichtaufbaus einer Membran-Elektrodenanordnung 1 für Brennstoffzellen in perspektivischer Ansicht erkennen. Hierbei sind zwei Gasdiffusionselektroden GDE diametral gegenüberliegend angeordnet und durch eine zwischenliegende Membran 2 voneinander getrennt. Als Membran eignet sich z.B. eine Polymermembran, wie bspw. Nafion, die als Elektrolyt dient.

Die Gasdiffusionselektroden GDE werden aus einer Gasdiffusionsschicht GDL, einer hierauf angeordneten mikroporösen Schicht MPL und einer katalytischen Schicht 3 gebildet. Die Gasdiffusionsschicht GDL kann bspw. aus einem Kohlenstofffasergewebe gebildet werden, das dann mit einer mikroporösen Schicht MPL beschichtet wird. Diese mikroporöse Schicht MPL dient als Träger für die katalytische Schicht 3. Die katalytische Schicht 3 wird in der Regel auf einen handelsüblichen Träger 4 aufgebracht, der aus einer mit einer mikroporösen Schicht MPL versehenden Gasdiffusionsschicht GDL gebildet ist.

Zur Bildung einer solchen Gasdiffusionselektrode GDE, die einen Träger 4 aus Gasdiffusionsschicht GDL und mikroporöser Schicht MPL und eine auf die mikroporöse Schicht MPL des Trägers 4 aufgebrachte katalytische Schicht 3 hat, wird vorgeschlagen, die katalytische Schicht 3 durch wechselweises Aufbringen von edelmetallhaltigen Partikeln und von NML-Partikeln im physikalischen Gasphasenabscheideprozess auf den elektrisch leitfähigen und gasdurchlässigen Träger 4 aufzubringen, um auf diese Weise die katalytische Schicht 3 zu erzeugen.

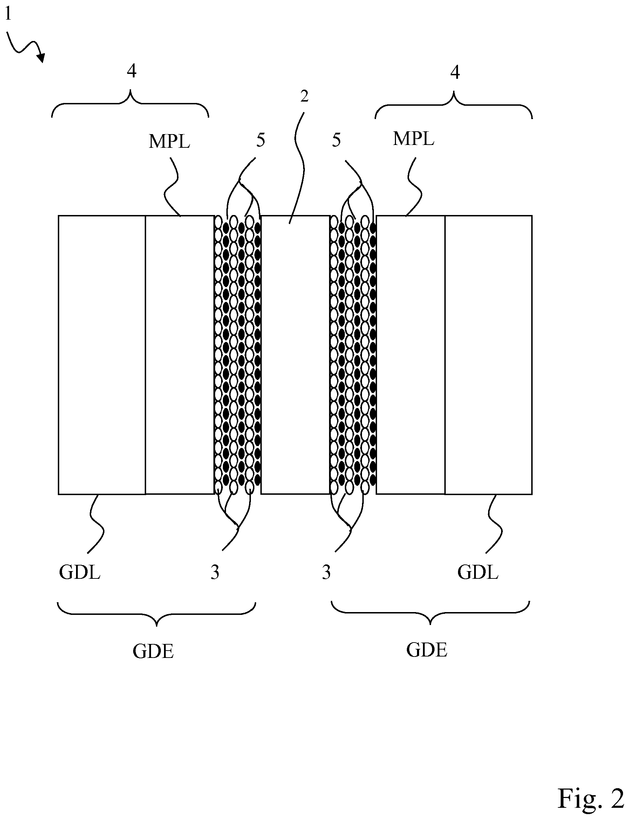

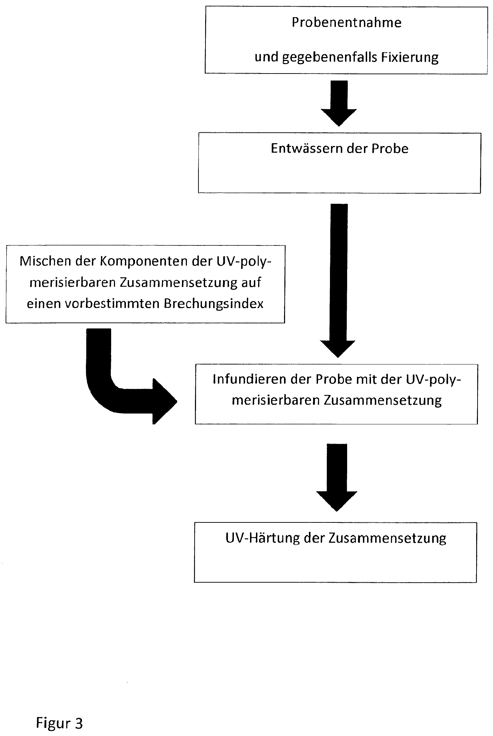

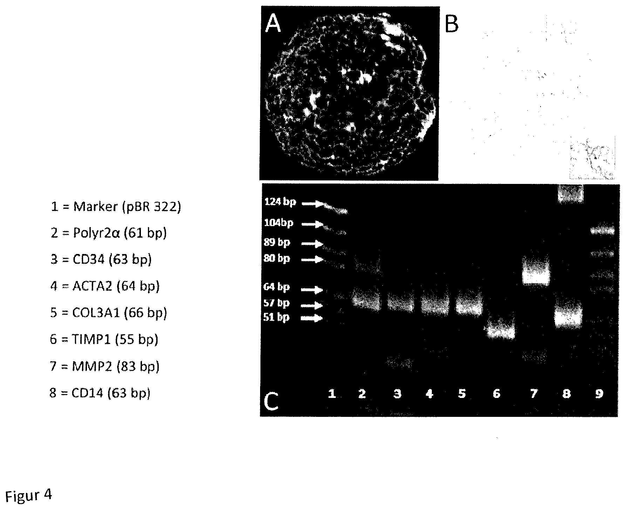

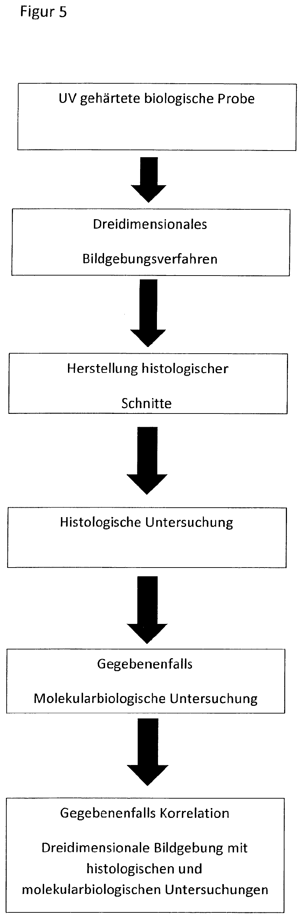

Figur 2 lässt eine Skizze einer Membran-Elektrodenanordnung 1 in Schnittdarstellung erkennen. Deutlich wird, dass die katalytische Schicht 3 zwischen der Membran 2 und der mikroporösen Schicht MPL des Trägers 4 aufgebracht ist und eine sehr dünne Schicht ausbildet.

In einem hybriden Prozess der physikalischen Gasphasenabscheidung wird dabei alternierend eine katalytische Schicht 3 und eine NML Schicht 5 sowie optional zusätzlich noch eine Platzhalter-Schicht aufgebracht. Die katalytische Schicht 3 und/oder NML Schicht 5 können auch herauslösbare Platzhalter-Partikel haben, um eine mesoporöse Struktur zu schaffen.

So kann optional zusätzlich eine Platzhalter-Schicht vorzugsweise aus einer lösbaren Substanz, wie beispielsweise einem unedlen Metall vorgesehen sein, um Platzhalter zur Schaffung einer mesoporösen Struktur bereitzustellen. Diese fein verteilte nicht deckende Schicht in Form homogen verteilter Partikel wird anschließend durch elektrochemische oder chemische Behandlung herausgelöst, um die mesoporöse Struktur zu bilden.

So kann z.B. eine Schicht aus platinhaltigen Partikeln, wie bspw. Platin oder eine Platin-Legierung wie Platin-Cobalt aufgesputtert werden. Anschließend werden NML Partikel wie bspw. kohlenstoffhaltige Partikel aufgesputtert. Optional kann eine zusätzliche Platzhalter-Schicht aus lösbaren Partikeln, wie z.B. einer unedle Metalle aufweisenden Legierung aufgebracht werden. Diese Platzhalter-Partikel können aber auch zusammen mit der katalytischen Schicht (z.B. durch Aufbringen eines Pt-Co-Gemischs) oder zusammen mit der NML Schicht eingebracht werden.

Dies wird mehrfach, d.h. zwei- oder mehrmals wiederholt, dass mindestens zwei Schichten von katalytischen Partikeln (d.h. die edelmetallhaltigen Partikel) und mindestens zwei Schichten von NML Partikeln (d.h. die nicht metallischen elektrisch leitfähigen Partikel in Form von graphit-, titan-, cobalt- und/oder wolframhaltigen Partikel und in Form von Oxidationsformen von Titan oder Wolfram enthaltenden Partikel) aufgesputtert werden. Insgesamt ergibt sich immer noch eine dünne Schicht aus wechselweisen edelmetallhaltigen Partikeln und amorphen NML-Partikeln mit einer Schichtdicke von etwa 10 nm bis 300 nm, die die edelmetallhaltige katalytische Schicht 3 ausbildet. Die edelmetallhaltigen Partikel haben dabei eine mittlere Partikelgröße von bevorzugt 3 nm bis 7 nm. Diese Edelmetall-Nanopartikel verteilen sich dabei sehr fein auf den NML-Partikeln, insbesondere den Kohlenstoffpartikeln, wobei unter Nutzung eines einzigen physikalischen Gasphasenabscheideprozesses für zwei unterschiedliche Komponenten, d.h. im Hybrid-PVD-Prozess eine kombinierte Dünnschicht mit hoher Stabilität geschaffen wird. Bei optionaler Nutzung von Platzhalter-Partikeln kann die Gasdurchlässigkeit deutlich gesteigert werden. Dadurch lässt sich die benötigte Menge von Edelmetallanteil erheblich reduzieren.

## Patentansprüche

1. Verfahren zur Herstellung von Gasdiffusionselektroden (GDE) für Brennstoffzellen, die mindestens einen elektrisch leitfähigen Träger (4) und mindestens eine edelmetallhaltige, katalytische Schicht (3) auf dem Träger (4) hat, wobei ein wechselweises Aufbringen von platinhaltigen Partikeln und von nicht metallischen leitfähigen graphit-, titan-, cobalt-und/oder wolframhaltigen Partikeln durch physikalische Gasphasenabscheidung auf den elektrisch leitfähigen Träger (4) zum Erzeugen der katalytischen Schicht (3) erfolgt, **dadurch gekennzeichnet, dass** bei dem wechselweisen Aufbringen von platinhaltigen Partikeln und von graphithaltigen Partikeln weiterhin Oxidationsformen von Titan oder Wolfram enthaltende Partikel im Wechsel zur Bildung einer mehrere alternierende Teilschichten aufweisenden katalytischen Schicht (3) durch physikalische Gasphasenabscheidung aufgebracht werden.

2. Verfahren nach Anspruch 1, **dadurch gekennzeichnet, dass** die platinhaltigen Partikel die Elemente Platin und Cobalt aufweisen.

3. Verfahren nach einem der Ansprüche 1 oder 2, **dadurch gekennzeichnet, dass** das wechselweise Aufbringen der Partikel zur Bildung der katalytischen Schicht (3) durch Bedampfen, Elektrodenstrahlverdampfen, Laserstrahlverdampfen, Lichtbogenverdampfen, Molekularstrahlepitaxie, Sputtern, Magnetron-Sputtern, lonenplatieren oder ionisierte Cluster-Strahl-Abscheidung (ICBD) erfolgt.

4. Verfahren nach einem der vorhergehenden Ansprüche, **gekennzeichnet durch** weiteres Aufbringen von unedle Metalle enthaltenden Partikeln im Schritt des wechselweisen Aufbringens der Partikel zur Bildung der katalytischen Schicht (3) als Platzhalter und anschließendes Herauslösen der Platzhalter.

5. Gasdiffusionselektrode (GDE) für Brennstoffzellen mit mindestens einem elektrisch leitfähigen und gasdurchlässigen Träger (4) und mit mindestens einer edelmetallhaltigen katalytischen Schicht (3) auf dem Träger (4), wobei die edelmetallhaltige katalytische Schicht (3) alternierende, in physikalischen Gasphasenabscheideprozessen aufgebrachte Dünnschichten aus platinhaltigen Partikeln und aus nicht metallischen leitfähigen graphit-, titan-, cobalt- und/oder wolframhaltigen Partikeln hat, **dadurch gekennzeichnet, dass** die edelmetallhaltige katalytische Schicht (3) weiterhin wechselweise zu den platinhaltigen Partikeln und nicht metallischen leitfähigen graphit-, titan-, cobalt- und/oder wolframhaltigen Partikeln Oxidationsformen von Titan oder Wolfram enthaltende Partikel aufweist.

6. Gasdiffusionselektrode (GDE) nach Anspruch 5, **dadurch gekennzeichnet, dass** die platinhaltigen Partikel die Elemente Platin und Cobalt aufweisen, wobei der Anteil von Cobalt im wesentlichen unter Bildung einer mesoporösen Struktur herausgelöst ist.

7. Gasdiffusionselektrode (GDE) nach Anspruch 5 oder 6, **dadurch gekennzeichnet, dass** die titanhaltigen Partikel Titanoxid oder Titandioxid aufweisen.

8. Gasdiffusionselektrode (GDE) nach einem der Ansprüche 5 bis 7, **dadurch gekennzeichnet, dass** die wolframhaltigen Partikel Wolframoxid aufweisen.

9. Gasdiffusionselektrode (GDE) nach einem der Ansprüche 5 bis 8, **dadurch gekennzeichnet, dass** die auf dem elektrisch leitfähigen Träger (4) aufgebrachte katalytische Schicht (3) eine durch Herauslösen von Partikeln gebildete mesoporöse Struktur hat.

10. Brennstoffzelle mit einer Mehrzahl von Gasdiffusionselektroden (GDE) nach einem der Ansprüche 5 bis 9, **dadurch gekennzeichnet, dass** jeweils zwei Gasdiffusionselektroden (GDE) diametral gegenüberliegend angeordnet sind und zwischen den benachbarten edelmetallhaltigen katalytischen Schichten (3) auf den elektrisch leitfähigen und gasdurchlässigen Trägern (4) eines Paares von Gasdiffusionselektroden (GDE) eine Membran (2) angeordnet ist.

## Claims

1. Process for producing gas diffusion electrodes (GDE) for fuel cells which have at least one electrically conductive support (4) and at least one noble-metal-containing catalytic layer (3) on the support (4), wherein platinum-containing particles and non-metallic, conductive graphite-, titanium-, cobalt-and/or tungsten-containing particles are alternately applied by physical vapour deposition to the electrically conductive support (4) for creating the catalytic layer (3), **characterized in that,** during the alternating application of platinum-containing particles and of graphite-containing particles, particles containing oxidation forms of titanium or tungsten are additionally applied in alternation by physical vapour deposition to form a catalytic layer (3) having a plurality of alternating sublayers.

2. Process according to Claim 1, **characterized in that** the platinum-containing particles include the elements platinum and cobalt.

3. Process according to either of Claims 1 and 2, **characterized in that** the alternating application of the particles to form the catalytic layer (3) is effected by vapour deposition, electron beam evaporation, laser beam evaporation, arc evaporation, molecular beam epitaxy, sputtering, magnetron sputtering, ion plating or ionized cluster beam deposition (ICBD).

4. Process according to any of the preceding claims, **characterized by** further application of base-metal-containing particles in the step of alternately applying the particles to form the catalytic layer (3) as placeholders and subsequent leaching-out of the placeholders.

5. Gas diffusion electrode (GDE) for fuel cells having at least one electrically conductive and gas-permeable support (4) and having at least one noble-metal-containing catalytic layer (3) on the support (4), wherein the noble-metal-containing catalytic layer (3) has alternating thin layers which are applied in physical vapour deposition processes and are composed of platinum-containing particles and of non-metallic conductive graphite-, titanium-, cobalt- and/or tungsten-containing particles, **characterized in that** the noble-metal-containing catalytic layer (3) additionally includes, alternating with the platinum-containing particles and non-metallic conductive graphite-, titanium-, cobalt- and/or tungsten-containing particles, particles containing oxidation forms of titanium or tungsten.

6. Gas diffusion electrode (GDE) according to Claim 5, **characterized in that** the platinum-containing particles include the elements platinum and cobalt, wherein the cobalt content is essentially leached out to form a mesoporous structure.

7. Gas diffusion electrode (GDE) according to Claim 5 or 6, **characterized in that** the titanium-containing particles include titanium oxide or titanium dioxide.

8. Gas diffusion electrode (GDE) according to any of Claims 5 to 7, **characterized in that** the tungsten-containing particles include tungsten oxide.

9. Gas diffusion electrode (GDE) according to any of Claims 5 to 8, **characterized in that** the catalytic layer (3) applied to the electrically conductive support (4) has a mesoporous structure formed by leaching particles out.

10. Fuel cell having a plurality of gas diffusion electrodes (GDE) according to any of Claims 5 to 9, **characterized in that** in each case two gas diffusion electrodes (GDE) are in a diametrically opposed arrangement and a membrane (2) is arranged between the adjacent noble-metal-containing catalytic layers (3) on the electrically conductive and gas-permeable supports (4) of a pair of gas diffusion electrodes (GDE) .

## Revendications

1. Procédé de fabrication d'électrodes à diffusion de gaz (GDE) pour piles à combustible, qui comprennent au moins un support électriquement conducteur (4) et au moins une couche catalytique contenant un métal noble (3) sur le support (4), une application alternée de particules contenant du platine et de particules conductrices non métalliques contenant du graphite, du titane, du cobalt et/ou du tungstène par dépôt physique en phase vapeur sur le support électriquement conducteur (4) ayant lieu pour la formation de la couche catalytique (3), **caractérisé en ce que** des particules contenant des formes oxydées de titane ou de tungstène sont en outre appliquées en alternance lors de l'application alternée de particules contenant du platine et de particules contenant du graphite pour la formation d'une couche catalytique (3) comprenant plusieurs couches partielles alternées par dépôt physique en phase vapeur.

2. Procédé selon la revendication 1, **caractérisé en ce que** les particules contenant du platine comprennent les éléments platine et cobalt.

3. Procédé selon l'une quelconque des revendications 1 ou 2, **caractérisé en ce que** l'application alternée des particules pour la formation de la couche catalytique (3) a lieu par vaporisation, évaporation par faisceau d'électrons, évaporation par faisceau laser, évaporation par arc électrique, épitaxie par jet moléculaire, pulvérisation, pulvérisation au magnétron, placage ionique ou dépôt par faisceau d'agglomérats ionisés (ICBD).

4. Procédé selon l'une quelconque des revendications précédentes, **caractérisé par** l'application supplémentaire de particules contenant des métaux non nobles lors de l'étape d'application alternée des particules pour la formation de la couche catalytique (3) en tant qu'éléments de substitution, puis l'extraction des éléments de substitution.

5. Électrode à diffusion de gaz (GDE) pour piles à combustible contenant au moins un support électriquement conducteur et perméable aux gaz (4) et au moins une couche catalytique contenant un métal noble (3) sur le support (4), la couche catalytique contenant un métal noble (3) comprenant des couches minces alternées, appliquées par des procédés de dépôt physique en phase vapeur, de particules contenant du platine et de particules conductrices non métalliques contenant du graphite, du titane, du cobalt et/ou du tungstène, **caractérisée en ce que** la couche catalytique contenant un métal noble (3) comprend en outre des particules contenant des formes oxydées de titane ou de tungstène en alternance des particules contenant du platine et des particules conductrices non métalliques contenant du graphite, du titane, du cobalt et/ou du tungstène.

6. Électrode à diffusion de gaz (GDE) selon la revendication 5, **caractérisée en ce que** les particules contenant du platine comprennent les éléments platine et cobalt, la fraction de cobalt étant essentiellement extraite avec formation d'une structure mésoporeuse.

7. Électrode à diffusion de gaz (GDE) selon la revendication 5 ou 6, **caractérisée en ce que** les particules contenant du titane comprennent de l'oxyde de titane ou du dioxyde de titane.

8. Électrode à diffusion de gaz (GDE) selon l'une quelconque des revendications 5 à 7, **caractérisée en ce que** les particules contenant du tungstène comprennent de l'oxyde de tungstène.

9. Électrode à diffusion de gaz (GDE) selon l'une quelconque des revendications 5 à 8, **caractérisée en ce que** la couche catalytique (3) appliquée sur le support électriquement conducteur (4) présente une structure mésoporeuse formée par extraction de particules.

10. Pile à combustible comprenant une pluralité d'électrodes à diffusion de gaz (GDE) selon l'une quelconque des revendications 5 à 9, **caractérisée en ce que** deux électrodes à diffusion de gaz (GDE) sont à chaque fois agencées sous forme diamétralement opposée, et une membrane (2) est agencée entre les couches catalytiques contenant un métal noble voisines (3) sur les supports électriquement conducteurs et perméables aux gaz (4) d'une paire d'électrodes à diffusion de gaz (GDE) .
